# EUROPEAN PATENT APPLICATION

(11) **EP 4 411 697 A1**
(43) Date of publication of application: **07.08.2024**
(21) Application number: 22875548.4
(22) Date of filing: 13.07.2022
(51) Int. Cl.: G09B 29/00

(54) **INFORMATION PROCESSING METHOD, PROGRAM, AND INFORMATION PROCESSING DEVICE**

(30) Priority: 28.09.2021 JP 2021158001
(71) Applicant: Dynamic Map Platform Co., Ltd., Shibuya-ku, Tokyo 1500002 (JP)
(72) Inventor: AMAGAI, Hiromichi, Tokyo 103-0022 (JP); YOSHIMURA, Shuichi, Tokyo 103-0022 (JP); ASO, Noriko, Tokyo 103-0022 (JP); ISHII, Ryuji, Tokyo 103-0022 (JP); ODA, Hiroyuki, Tokyo 103-0022 (JP); JINGUJI, Takumi, Tokyo 103-0022 (JP); MOCHIZUKI, Yoji, Tokyo 103-0022 (JP)
(74) Representative: Bosch Jehle Patentanwaltsgesellschaft mbH
(86) International application number: PCT/JP2022/027600
(87) International publication number: WO 2023/053670

(57) **Abstract**

An information processing method is provided, which is executed by an information processing apparatus including a processor, and the processor acquires three-dimensional map data (S102), divides the three-dimensional map data into predetermined three-dimensional spaces (S104), and assigns identification information to each of the divided three-dimensional spaces (S106).

## Description

### Technical Field

**The** present invention relates to an information processing method, a program, and an information processing apparatus.

### Background Art

There is conventionally known a method for extracting a display area by using IDs assigned to two-dimensional regions when a three-dimensional map is displayed (for example, refer to Patent Document 1).

### Citation List

### Patent Document

Patent Document 1: Patent Publication JP-A-2011-197064

### Summary

### Technical Problem

However, since the conventional technique is assumed to be used for image displaying for vehicles travelling on a road, the range of use of this technique is limited.

In recent years, high-precision three-dimensional map data has been studied and developed, and the use of three-dimensional map data has been discussed. For example, there is an issue with how to utilize three-dimensional map data for, for example, managing routing of flying objects such as drones, which fly in an airspace outside the visual range of the operator, so that a collision in the air can be avoided.

In view of the above issue, an object of the present invention is to provide three-dimensional map data that is convenient to use by focusing on the height direction of the three-dimensional map data.

### Solution to Problem

An information processing method according to one aspect of the present invention is an information processing method executed by an information processing apparatus including a processor, the method including: with the processor, acquiring three-dimensional map data; dividing the three-dimensional map data into predetermined three-dimensional spaces; and assigning identification information to each of the divided three-dimensional spaces.

### Advantageous Effects of Invention

According to the present invention, three-dimensional map data that is convenient to use can be provided by focusing on the height direction of the three-dimensional map data.

### Brief Description of Drawings

Fig. 1 is a diagram illustrating an example of a hierarchical structure of map data according to an embodiment of the present invention.
Fig. 2 is a diagram illustrating an example of the hierarchical structure of the map data according to an embodiment of the present invention.
Fig. 3 is a diagram illustrating an example of a configuration of an information processing apparatus according to an embodiment of the present invention.
Fig. 4 is a diagram illustrating examples of a process for dividing a three dimensional space and a process for assigning IDs according to an embodiment of the present invention.
Fig. 5 is a diagram illustrating an example of wide-area identification information and narrow-area identification information according to an embodiment of the present invention.
Fig. 6 is a diagram illustrating an example of feature codes according to an embodiment of the present invention.
Fig. 7 is a diagram illustrating an example of common information of feature data according to an embodiment of the present invention.
Fig. 8 is a diagram illustrating an example in which a specified lane is associated with a building/facility according to an embodiment of the present invention.
Fig. 9 is a flowchart illustrating an example of a process relating to ID assignment according to an embodiment of the present invention.

### Description of Embodiments

### [Embodiments]

Preferred embodiments of the present information will be described with reference to the accompanying drawings. In the drawings, the same reference characters denote the same or similar components.

### <Outline of Map Data>

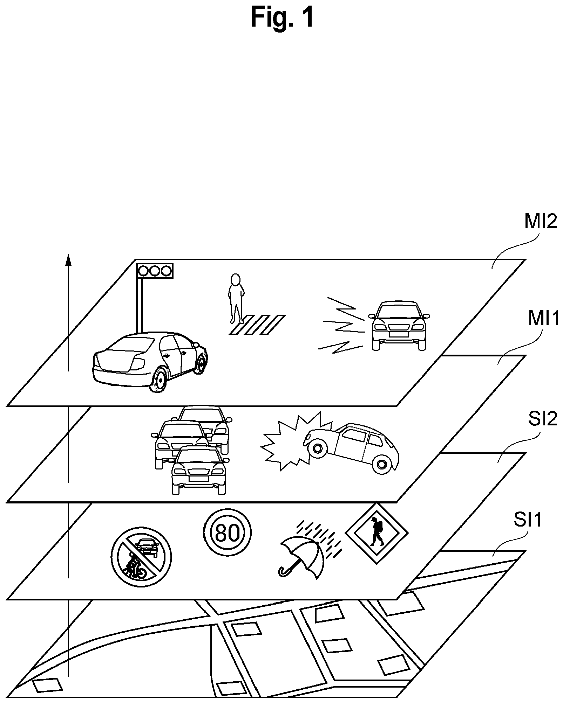

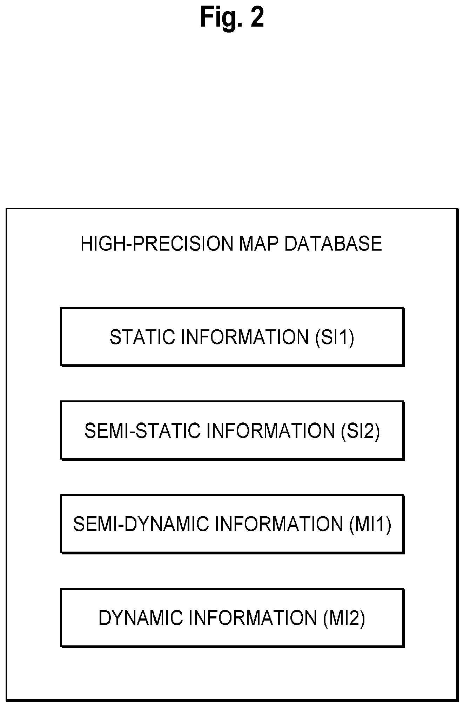

An outline of map data used in the present embodiment will be described with reference to Figs. 1 and 2. The map data used in the present embodiment is, for example, high-precision three-dimensional map data used for autonomous driving or the like. As a specific example, this map data is data of a map called a dynamic map to which more dynamic information such as information on peripheral vehicles and traffic information is added. The map data is provided in real time. The map data used in the present embodiment is classified into, for example, four layers.

Figs. 1 and 2 are diagrams illustrating an example of a hierarchical structure of the map data according to an embodiment of the present invention. In the example illustrated in Figs. 1 and 2, the map information is classified into static information SI1, semi-static information SI2, semi-dynamic information MI1, and dynamic information MI2.

The static information SI1 is high-precision three-dimensional basic map data (high-precision three-dimensional map data). The static information SI1 includes road surface information, lane information, three-dimensional structures, and the like and is configured by three-dimensional position coordinates and linear vectors indicating features. The semi-static information SI2, the semi-dynamic information MI1, and the dynamic information MI2 are ever-changing dynamic data that are superimposed on the static information based on position information.

The semi-static information SI2 includes traffic regulation information, road construction information, wide-area weather information, etc. The semi-dynamic information MI1 includes accident information, traffic congestion information, narrow-area weather information, etc. The dynamic information MI2 includes intelligent transport system (ITS) information and includes information on peripheral vehicles, pedestrians, traffic light information, etc.

The three-dimensional map data in the present embodiment may include three-dimensional map data generated from a satellite image. For example, high-precision map data may be generated by correcting the satellite image, and the present embodiment is applicable to this type of three-dimensional map data.

Hereinafter, space division performed on the three-dimensional map data according to the present embodiment will be described. The present embodiment focuses on the height direction, and the three-dimensional map data is divided into predetermined three-dimensional spaces. Further, identification information is assigned to each of the three-dimensional spaces. This makes it possible to appropriately select the ID of each three-dimensional space when the routing of a flying object is set or other applications are used. As a result, there will be no need to set coordinate values of a desired area or set an area each time. Thus, according to the present embodiment, it is possible to provide the user with three-dimensional map data that is convenient to use. For example, by dividing a space into space units in a more manageable size, a flight route of a drone can be set, and peripheral information such as weather information can be associated with each space unit.

### <Configuration of Information Processing Apparatus>

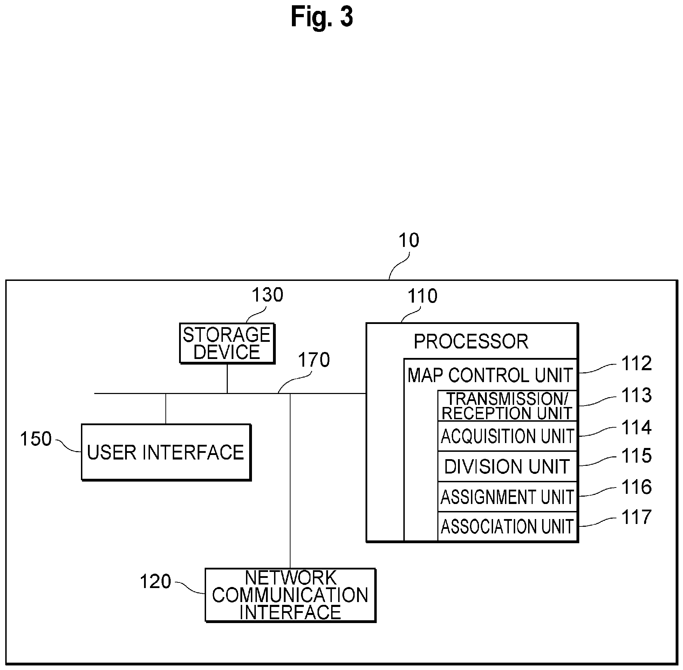

Fig. 3 is a diagram illustrating an example of a configuration of an information processing apparatus 10 according to an embodiment of the present invention. The information processing apparatus 10 includes one or more processors (central processing units (CPUs)) 110, one or more network communication interfaces 120, a storage device 130, a user interface 150, and one or more communication buses 170 for connecting these components with one another. The user interface 150 may be connected via a network.

The storage device 130 is, for example, a high-speed random access memory such as a DRAM, an SRAM, or another random access solid-state storage device. The storage device 130 may be one or more non-volatile memories such as magnetic disk storage devices, optical disc storage devices, flash memory devices, or other non-volatile solid-state storage devices. The storage device 130 may be a computer-readable non-transitory recording medium.

In addition, another example of the storage device 130 may be one or more storage devices remotely located from the processor 110. In one embodiment, the storage device 130 stores programs executed by the processor 110, modules, and data structures, or subsets thereof.

**The** storage device 130 stores data used by the information processing system 1. For example, the storage device 130 stores three-dimensional map data and data related to generation of the three-dimensional map data. As a specific example, three-dimensional map data, feature data, and the like are stored in the storage device 130.

As described above with reference to Fig. 2, an example of the three-dimensional map data includes the static information SI1, the semi-static information SI2, the semi-dynamic information MI1, and the dynamic information MI2, and these items of information are associated with each other.

The static information SI1 includes high-precision three-dimensional map data, and the high-precision three-dimensional map data includes feature data. The feature data serves as basic information when an application uses this high-precision three-dimensional map data.

**The** processor 110 that performs processing relating to generation of the three-dimensional map data according to the present embodiment will be described. The processor 110 executes programs stored in the storage device 130 to configure a map control unit 212, a transmission/reception unit 113, an acquisition unit 114, a division unit 115, an assignment unit 116, and an association unit 117.

**The** processor 110 controls processing performed by each unit, which will be described below, and performs processing relating to generation of map data.

The map control unit 112 controls generation of three-dimensional map data by using various data. For example, the map control unit 112 controls generation of high-precision three-dimensional map data and also controls processing for dividing the high-precision three-dimensional map data into predetermined three-dimensional spaces and assigning identification information to each of the three-dimensional spaces.

The transmission/reception unit 113 transmits and receives data to and from an external apparatus via the network communication interface 120. For example, the transmission/reception unit 113 receives three-dimensional map data from an external device and receives a satellite image including a predetermined position from an observation satellite. The transmission/reception unit 113 also transmits three-dimensional map data that has been processed to an external device via the network communication interface 120.

The acquisition unit 114 acquires three-dimensional map data. For example, the acquisition unit 114 may acquire three-dimensional map data stored in the storage device 130 or may acquire three-dimensional map data received via the network communication interface 120 through the transmission/reception unit 113. The three-dimensional map data may be generated by measurement using a mobile mapping system (MMS) or may be generated from a satellite image. The generation process of the three-dimensional map data is not particularly limited.

**The** division unit 115 divides the three-dimensional map data acquired by the acquisition unit 114 into predetermined three-dimensional spaces. For example, the division unit 115 divides the three-dimensional map data into predetermined three-dimensional spaces in accordance with predetermined criteria and generates a plurality of three-dimensional spaces. The shape of the individual three-dimensional space is not particularly limited. However, the shape of the three-dimensional space may be specified in accordance with a model of the three-dimensional map data. For example, from the viewpoint of ease of division and management efficiency, a rectangular parallelepiped shape (including an approximately rectangular parallelepiped shape) is preferable. Further, a cubic shape (including an approximately cubic shape) is more preferable. In addition, not only the space above the ground or the sea but also the space under the ground or the sea may be divided as a division target to obtain the three-dimensional spaces.

**The** assignment unit 116 assigns identification information to each of the divided three-dimensional spaces. Any identification information may be used as long as the identification information can identify each three-dimensional space and is assigned in accordance with a predetermined rule. In addition, from the viewpoint of data management, the assignment unit 116 may assign the identification information in accordance with the rule that can easily derive peripheral three-dimensional spaces or a three-dimensional space in the same area.

According to the process described above, three-dimensional map data that is convenient to use can be provided by focusing on not only the horizontal plane on the ground on which vehicles or the like travel but also the height direction in the three-dimensional map data. That is, it is possible to expand the range of use of the identification information assigned to each of the three-dimensional spaces in the three-dimensional map data. For example, the identification information can be appropriately selected and extracted in accordance with a predetermined purpose. In the routing of a flying object, for example, a corridor of the flying object can be appropriately set by selecting and combining the identification information. Further, a geofence up to a predetermined height can be easily formed by simply selecting the identification information of the three-dimensional space.

In addition, the division unit 115 may generate the three-dimensional spaces with respect to horizontally stretched two-dimensional map data included in the three-dimensional map data by using predetermined two-dimensional regions obtained by horizontally dividing the two-dimensional map data and by dividing each of the two-dimensional regions at a predetermined height. For example, the division unit 115 may use map data divided into a Universal Transverse Mercator (UTM) grid and generate three-dimensional spaces by dividing each divided region at a predetermined height in the height direction. If the predetermined height is the same as the longitudinal/latitudinal distance obtained by the grid division, cubic three-dimensional spaces are generated, and if the predetermined height is different from the latitudinal/longitudinal distance obtained by the grid division, rectangular parallelepiped three-dimensional spaces are generated. In this way, the three-dimensional spaces can be easily obtained by using existing map data.

The division unit 115 may divide two-dimensional map data included in the three-dimensional map data into predetermined two-dimensional regions in accordance with predetermined criteria and generate predetermined three-dimensional spaces by dividing each of the two-dimensional regions at a predetermined height. In this way, a map creator can freely determine the size of the three-dimensional space depending on the purpose.

The division unit 115 may change the unit of the predetermined three-dimensional space based on the position of the three-dimensional space in the three-dimensional map data. For example, the division unit 115 may appropriately change the size of the three-dimensional space based on its position in the height or horizontal direction on the map or may subdivide or aggregate the division depending on the purpose. This makes it possible to generate a flexible three-dimensional space based on the position in the three-dimensional map data. Note that the height may be based on any of the elevation, the geoidal height, and the ellipsoidal height. Further, if the size of the three-dimensional space is to be made as uniform as possible, the height may be defined by using the geoidal height. Further, the ellipsoidal height or the elevation may be derived from the geoidal height based on a relationship of the elevation = the ellipsoidal height - the geoidal height by using IDs assigned to space regions described below as keys.

The division unit 115 may change at least the unit of the predetermined three-dimensional space in the height direction based on the height. For example, the division unit 115 may increase the unit of the division height as the height increases. This is because the necessity for subdivision is likely to be reduced as the height increases. In addition, the division unit 115 may change not only the unit of the three-dimensional space in the height direction but also the size of the three-dimensional space in the horizontal direction based on the height. For example, the division unit 115 may increase the size of the division in the horizontal direction as the height increases.

This makes it possible to meet the necessity for subdivision or aggregation of the division in the height direction by changing at least the unit of the three-dimensional space in the height direction based on the height. For example, by increasing the unit in the height direction as the height increases, the load of the division processing and the identification information assignment processing can be reduced. As a result, the processing can be efficiently performed.

The division unit 115 may change at least the unit of the predetermined three-dimensional space in the horizontal direction based on feature data or region information included in the three-dimensional map data. For example, the division unit 115 may change at least the unit of the three-dimensional space in the horizontal direction depending on whether a division target area is a mountainous area or an urban area. More specifically, if the division target is a mountainous area, the division unit 115 may set the unit of the three-dimensional space in the horizontal direction to be larger than the unit used in an urban area. If the division target area is a mountainous area, the division unit 115 may set the unit of the three-dimensional space in the height direction to be larger than the unit used in an urban area.

The division unit 115 may change at least the unit of the predetermined three-dimensional space in the horizontal direction based on the type of the feature data (for example, an expressway, a general road, traffic lights, or the number of lanes) included in the three-dimensional map data. For example, the division unit 115 may increase the unit of the three-dimensional space even more in the horizontal direction for a region other than an expressway, an arterial road with many lanes, and the periphery of traffic lights. In addition, the division unit 115 may increase the unit of the three-dimensional space even more in the height direction for a region other than an expressway, an arterial road with many lanes, and the periphery of traffic lights.

This makes it possible to determine the size of the three-dimensional space in the horizontal direction in accordance with the characteristics of the division target area based on the feature data or the region information included in the three-dimensional map data. For example, by increasing the unit of the three-dimensional space in the horizontal direction in a mountainous area, the load of the division processing and the identification information assignment processing can be reduced. As a result, the processing can be efficiently performed.

The assignment unit 116 may assign identification information based on coordinate values at a predetermined position in each three-dimensional space. For example, based on the coordinate values (the longitude, latitude, and height) of the center position in the three-dimensional space, the assignment unit 116 may combine each of the coordinate values and generate identification information. In addition, the assignment unit 116 may assign identification information by using a UTM-zone number. For example, a UTM-zone number + a number of several digits indicating the latitude, longitude, and height may be set as an identification number.

This makes it possible to use the regional characteristics to narrow down the three-dimensional space when a search for the identification number of the three-dimensional space is performed.

The association unit 117 associates feature data included in the three-dimensional space with the dentification information corresponding to a predetermined position in this three-dimensional space. For example, the association unit 117 associates feature data included in the three-dimensional space with the center position in this three-dimensional space. The feature data may already be included in the three-dimensional map data or may be generated by extracting a feature from an image captured in the three-dimensional space by image recognition or the like. The predetermined position in the three-dimensional space is not limited to the center position and may be one of the vertices or a characteristic position in the three-dimensional space.

This makes it possible to extract, from the identification information on each three-dimensional space in the three-dimensional map data, the feature data included in the corresponding three-dimensional space. As a result, the extracted feature data can be utilized in an autonomous driving technique, feature management, and the like.

### <Specific Examples>

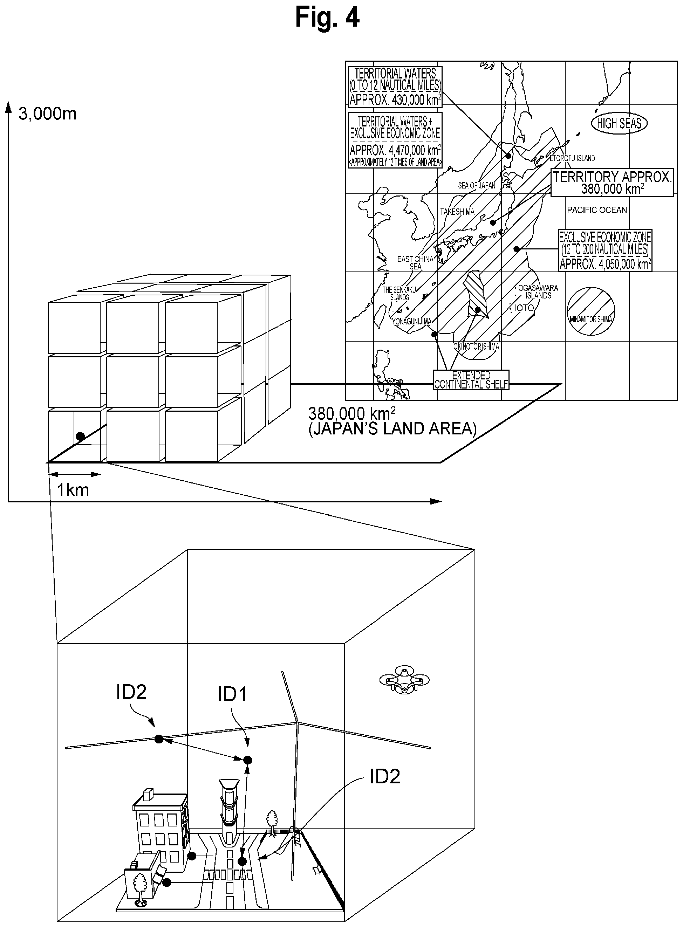

Next, the division of the three-dimensional space and the assignment of the identification information will be described by using specific examples. Fig. 4 is a diagram illustrating examples of a process for dividing a three-dimensional space and a process for assigning IDs according to an embodiment of the present invention. In the example illustrated in Fig. 4, the three-dimensional space of Japan's land area is divided into predetermined three-dimensional spaces. For example, the division unit 115 sets Japan's land area (approximately 380,000 km²) and the space up to an altitude of 3000 m as a division target area in the three-dimensional map data. The altitude of 3000 is the maximum flight altitude of a helicopter without an oxygen supply. Alternatively, an altitude other than the above-described altitude may be used.

The division unit 115 divides the division target area into cubes each of which has each edge measuring 1 km. As a result, 380,000 (km²) × 3 (km) = 1, 140,000 three-dimensional spaces are generated. The unit of each edge may be other than 1 km and may be 5 km, 500 m, 100 m, etc. The shape of the individual three-dimensional space may be other than a cube and may be a rectangular parallelepiped or the like.

The assignment unit 116 assigns identification information to each three-dimensional space. For example, the assignment unit 116 may assign two types of IDs, which are wide-area identification information ID1 and narrow-area identification information ID2. The wide-area identification information ID1 is, for example, an ID for identifying the individual three-dimensional space and also serves as a management ID for managing the individual three-dimensional space. In addition, the narrow-area information ID2 included in each of the three-dimensional spaces is individually managed. In this way, the number of digits of the narrow-area information ID2 can be reduced, and the communication volume for distributing the narrow-area information ID2 can be reduced.

The narrow-area identification information ID2 is an ID assigned to, for example, a predetermined area. The narrow-area identification information ID2 is associated with the corresponding wide-area identification information ID1 and is managed for each predetermined application. The narrow-area information ID2 is information for identifying an object and may be guaranteed to be persistent. Basically, one ID is assigned to one object. However, in a case where the objects are the same, but the acquisition criteria are different, the objects may be managed by different IDs. The predetermined area may be a densely inhabited district.

The narrow-area identification information ID2 may also be used for the purpose of, for example, managing necessary information in an autonomous mobility operation. When the predetermined application is AD (Autonomous Driving)/ADAS (Advanced Driver Assistance System), PMV (Personal Mobility Vehicle), or the like, a roadway, a lane, a sidewalk, a sign, a road marking, a building, and the like are used as objects of the narrow-area identification information, and respective IDs (identification information) are assigned thereto. In addition, when the predetermined application is a flying object such as a drone, an air route, an emergency evacuation area, a flight-restricted area, and the like are used as objects of the narrow-area identification information, and respective IDs are assigned thereto. When the predetermined application is snow removal, a lane, a sidewalk, a manhole, a bridge joint, and the like are used as objects of the narrow-area identification information, and respective IDs are assigned thereto.

As specific examples, the narrow-area identification information ID2 is an ID assigned to a predetermined position of a corridor used for routing of the flying object, an ID of feature data used for autonomous driving, and the like. The feature data illustrated in Fig. 4 is a lane. The association unit 117 associates the ID assigned to the lane and the ID of the corridor with the corresponding wide-area ID.

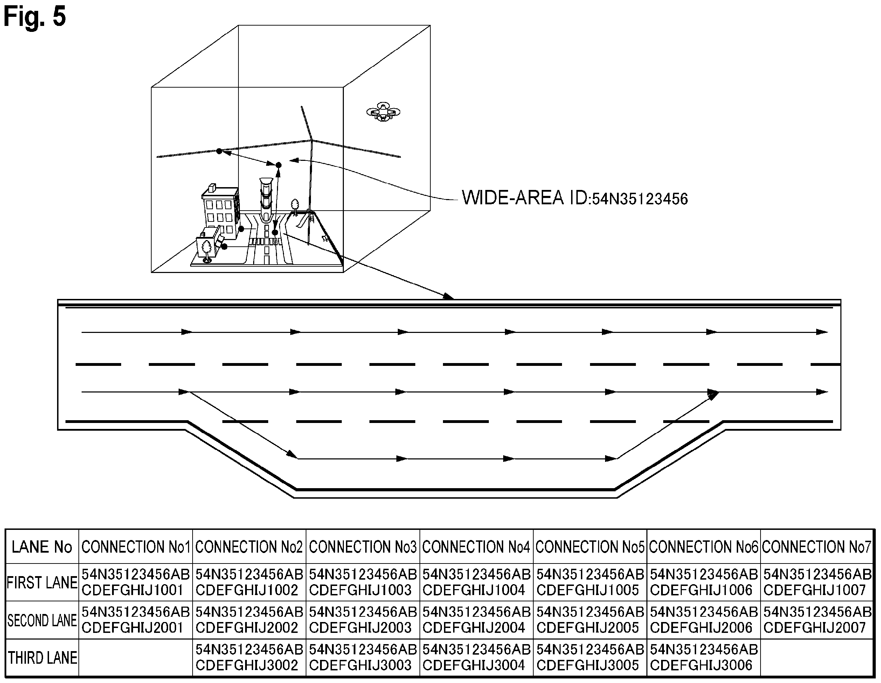

Next, examples of the wide-area identification information and the narrow-area identification information to be assigned will be described. Fig. 5 is a diagram illustrating examples of the wide-area identification information and the narrow-area identification information according to an embodiment of the present invention. In the example illustrated in Fig. 5, the wide-area identification information on the three-dimensional space is "54N35123456". This is an example of information obtained by combining "54" of the UTM zone, the north latitude "N35", and a 6-digit number (a number indicating the longitude and the altitude).

In the example illustrated in Fig. 5, the number of lanes on the roadway is three, and the number of links connecting the lanes is seven. The narrow-area identification information of the lane is generated by joining the ID of the feature data to the wide-area identification information represented by "54N35123456". The ID portion of the feature data connected to the wide-area identification information may be referred to as narrow-area identification information.

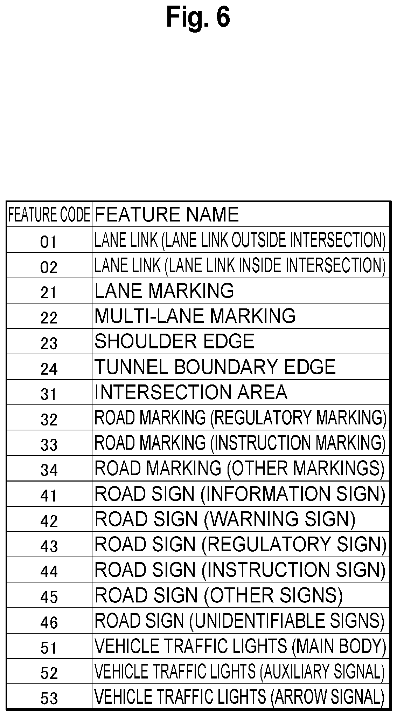

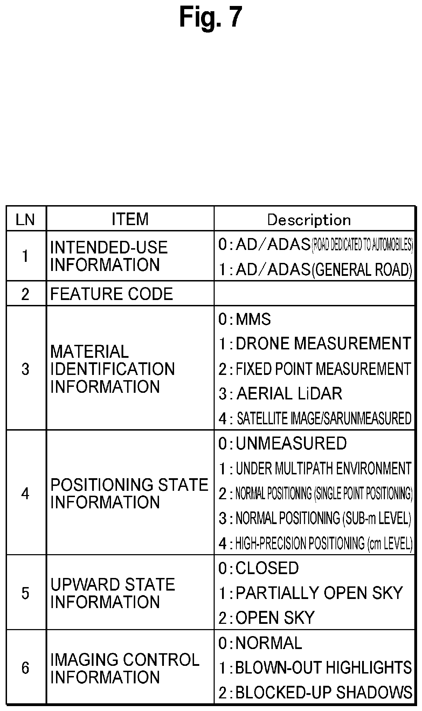

In the example illustrated in Fig. 5, when the ID of the feature data of the lane is "ABCDEFGHI1001", the 9-digit information "ABCDEFGHI" includes common information of the feature data (which will be described below with reference to Figs. 6 and 7) and data representing the feature data of the lane. The information "10001" includes the tenth digit "1" indicating the lane 1 and the eleventh to fourteenth digits "0001" indicating the link number. In this way, it is possible to reduce the number of digits of the ID (narrow-area identification information) of the feature data, compared to the case where the ID is assigned to the feature data without specifying the three-dimensional space. Note that the information given to each connection number in Fig. 5 indicates a lane link ID (narrow-area identification information of the lane link).

Next, feature codes for identifying the feature data and common information of the feature data including the feature code will be described. In the example described above, the first six digits of "ABCDEFGHI" represent the ID commonly used by each item of feature data.

Fig. 6 is a diagram illustrating an example of feature codes according to an embodiment of the present invention. The feature code is data related to feature identification and is included in, for example, the common information of the feature data. The feature code is associated with a feature name.

In the example illustrated in Fig. 6, a feature code "01" indicates a feature name "lane link (lane link outside an intersection)", and a feature code "02" indicates a feature name "lane link (lane link inside an intersection)". The lane link may be referred to as "lane centerline" and includes a plurality of constituent points.

The type of feature can be determined by the first digit numeral of the feature code. For example, the feature code having the first digit of "0" indicates that the feature is related to a lane link. The feature code having the first digit of "2" indicates that the feature is painted on the road, etc. (a lane marking, a multi-lane marking, a shoulder edge, a tunnel boundary edge, etc.). The feature code having the first digit of "3" indicates that the feature is an intersection or a road marking (a regulatory marking, an instruction marking, other markings, etc.). The feature code having the first digit of "4" indicates that the feature is a road sign (an information sign, a warning sign, a regulatory sign, an instruction sign, other signs, an unidentifiable sign, etc.). The feature code having the first digit of "5" indicates that the feature is vehicle traffic lights (a main body, an auxiliary signal, an arrow, etc.).

Fig. 7 is a diagram illustrating an example of common information of the feature data according to an embodiment of the present invention. In the example illustrated in Fig. 7, common information of the feature data includes intended-use information, a feature code, material identification information, positioning state information, upward state information, imaging control information, and the like.

The intended-use information includes information for specifying whether AD/ADAS is used on a road dedicated to automobiles or a general road. The road dedicated to automobiles indicates a road or the like on which a vehicle moves in the lateral direction as a parallel traveling state at a branching or merging point, for example. The feature code includes any of the codes illustrated in Fig. 6.

The material identification information, the positioning state information, and the upward state information are information specified by a specifying unit 216 as described above. At least one of the items of information specified by the specifying unit 216 is included in a predetermined field (field of LN (Line Number) illustrated in Fig. 7) of the feature data illustrated in Fig. 7 by a generation unit 217. Fig. 7 illustrates an example of the feature data that includes all of the material identification information, the positioning state information, and the upward state information.

The material identification information illustrated in Fig. 7 includes information for specifying any one item of measurement by "MMS", "drone measurement", "fixed point measurement", measurement by "aerial LiDAR", and measurement by "satellite image/SAR image". The positioning state identification information includes information for specifying any one of the positioning states that are "unmeasured", "under a multipath environment", "normal positioning (single point positioning)", "normal positioning (sub-m level)", and "high-precision positioning (cm level)". The upward state information includes information for specifying any one of the upward states that are "closed", "partially open sky", and "open sky".

The imaging control information is information specified by the specifying unit 216. In the example illustrated in Fig. 7, blown-out highlights, blocked-up shadows, and the like are identified by using a histogram of pixel values of a captured image. The imaging control information may include an aperture value, an ISO value, a shutter speed, and the like. Since the imaging control information is included in the feature data, an in-vehicle camera can image a feature by using appropriate parameters based on the imaging control information and appropriately detect the feature.

The identification information corresponding to the feature data may be joined to the common information illustrated in Fig. 7, and information unique to the feature data may be added at the seventh digit or thereafter.

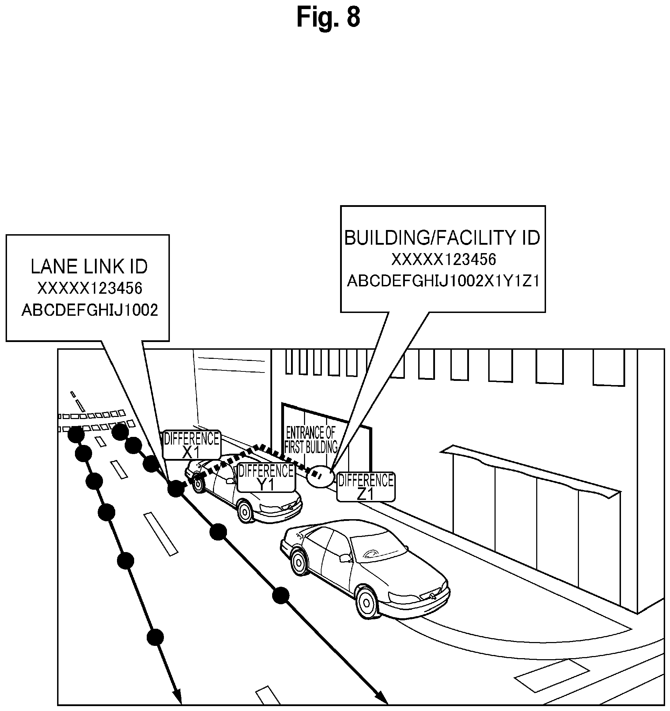

Next, an example in which the feature data of a building or a facility along the roadway is associated with the feature data of a lane will be described. Fig. 8 is a diagram illustrating an example in which a specified lane is associated with a building/facility according to an embodiment of the present invention. As illustrated in Fig. 8, the position information about a first building that is a predetermined building/facility is expressed by a difference (X1, Y1, Z1) between the entrance of the first building and the constituent point of the lane link represented by a lane link ID "XXXXX123456ABCDEFGHI1002". The building/facility data about the first building as the feature data is generated by adding the difference (X1, Y1, Z1) to the lane link ID "XXXXX123456ABCDEFGHI1002" as relative position information, and an ID "XXXXX123456ABCDEFGHI1 002X1 Y1 Z1" is generated. Further, the building/facility data on the first building may include, as data associated with the ID, any information related to the first building, such as the type, shape, and size of the first building.

In this example, a building/facility data ID "XXXXX123456ABCDEFGHI1 002X1Y1 Z1" of the first building is newly generated, and the building/facility data is generated by associating the building/facility information about the first building with the generated ID. Alternatively, the building/facility data of the first building may be handled as extension data of the lane link ID "XXXXX123456ABCDEFGHI1002". For example, the building/facility data may be included in the feature data of the lane link ID in association with the lane link ID "XXXXX123456ABCDEFGHI1002" of the constituent point of the lane link. Since buildings, facilities, and the like located around the lane link are directly associated with the lane link ID, the association can be easily grasped. Furthermore, convenience can also be improved from the viewpoint of data organization.

If a large amount of information related to the relative position (X1, Y1, Z1) occupies a large portion of memory, and if there is possibility of causing a delay in calculation processing, data transmission, or the like, for example, the relative position information (x1, y1, z1) may be converted by reducing the amount of information (the number of digits) in consideration of a predetermined resolution without significantly impacting the data used for the driver assistance system and the autonomous driving system, and the building/facility data of the first building may be set as "XXXXX123456ABCDEFGHI1002x1y1z1".

### <Operation>

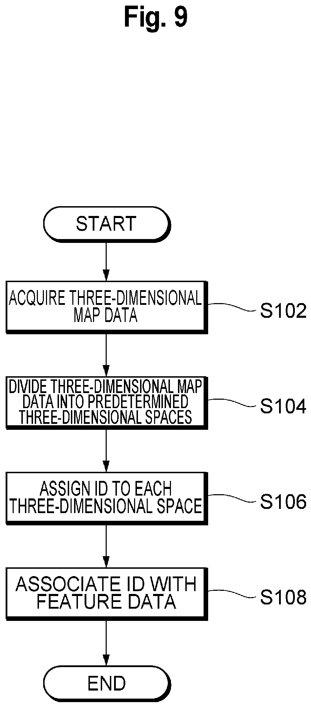

Next, a process relating to ID assignment of the information processing system 1 will be described. Fig. 9 is a flowchart illustrating an example of a process relating to ID assignment according to an embodiment of the present invention.

In step S102, the acquisition unit 114 of the information processing apparatus 10 acquires three-dimensional map data. The acquisition source of the three-dimensional map data may be the storage device 130 or an external device on the network.

In step S104, the division unit 115 of the information processing apparatus 10 divides the acquired three-dimensional map data into predetermined three-dimensional spaces in accordance with predetermined criteria. It is preferable that the division unit 115 divide the acquired three-dimensional map data into cubes of a predetermined size.

In step S106, the assignment unit 116 of the information processing apparatus 10 assigns identification information to each of the divided three-dimensional spaces in accordance with a predetermined rule. It is preferable that the predetermined rule be a rule commonly used in the world, for example, a rule using location information.

In step S108, the association unit 117 of the information processing apparatus 10 associates the identification information of the three-dimensional space with the feature data included in this three-dimensional space. Note that the processing in step S108 does not necessarily need to be performed.

According to the process described above, three-dimensional map data that is convenient to use can be provided by focusing on not only the horizontal plane on the ground on which vehicles or the like travel but also the height direction in the three-dimensional map data. That is, it is possible to expand the range of use of the identification information assigned to each of the three-dimensional spaces in the three-dimensional map data. For example, the identification information can be appropriately selected and extracted in accordance with a predetermined purpose. In the routing of the flying object, for example, the corridor of the flying object can be appropriately set by selecting and combining the identification information. Further, a geofence up to a predetermined height can be easily formed by simply selecting identification information of the three-dimensional space.

While the embodiments of the present invention have thus been described, the present invention is not limited thereto, and various modifications and changes can be made within the scope of claims. For example, a part of the processing performed by the information processing apparatus 10 in the present invention may be performed by another information processing apparatus, or a plurality of information processing apparatuses may be integrated as appropriate.

### Reference Signs List

- 1: Information processing system
- 10: Information processing apparatus
- 110: Processor
- 112: Map control unit
- 113: Transmission/reception unit
- 114: Acquisition unit
- 115: Division unit
- 116: Assignment unit
- 117: Association unit
- 130: Storage device
- 150: User interface
- 120: Network communication interface

## Claims

1. An information processing method executed by an information processing apparatus including a processor, the information processing method comprising: with the processor,
acquiring three-dimensional map data;
dividing the three-dimensional map data into predetermined three-dimensional spaces; and
assigning identification information to each of the divided three-dimensional spaces.

2. The information processing method according to claim 1, wherein
the dividing includes, with respect to horizontally stretched two-dimensional map data included in the three-dimensional map data, using predetermined two-dimensional regions obtained by horizontally dividing the two-dimensional map data and dividing each of the two-dimensional regions at a predetermined height, thereby generating the three-dimensional spaces.

3. The information processing method according to claim 1 or 2, wherein
the dividing includes changing a unit of the predetermined three-dimensional space based on a position in the three-dimensional map data.

4. The information processing method according to claim 3, wherein
the dividing includes changing at least a unit of the predetermined three-dimensional space in a height direction, based on a height.

5. The information processing method according to claim 3 or 4, wherein
The dividing includes changing at least a unit of the predetermined three-dimensional space in a horizontal direction, based on feature data or region information included in the three-dimensional map data.

6. The information processing method according to any one of claims 1 to 5, wherein
the assigning includes assigning identification information based on a coordinate value of a predetermined position in each of the three-dimensional spaces.

7. The information processing method according to claim 6, wherein
the processor further executes associating identification information corresponding to the predetermined position in the three-dimensional space with feature data in the three-dimensional space.

8. A program executed by an information processing apparatus including a processor, the program causing the processor to execute:
acquiring three-dimensional map data;
dividing the three-dimensional map data into predetermined three-dimensional spaces; and
assigning identification information to each of the divided three-dimensional spaces.

9. An information processing apparatus comprising a processor,
wherein the processor executes:
acquiring three-dimensional map data;
dividing the three-dimensional map data into predetermined three-dimensional spaces; and
assigning identification information to each of the divided three-dimensional spaces.
